(19) Europäisches Patentamt
European Patent Office
Office européen des brevets

(11) **EP 1 607 325 B1**

(12) **EUROPÄISCHE PATENTSCHRIFT**

(45) Veröffentlichungstag und Bekanntmachung des Hinweises auf die Patenterteilung:
**13.02.2008 Patentblatt 2008/07**

(51) Int Cl.:
***B64C 13/16*** *(2006.01)*

(21) Anmeldenummer: 05013005.3

(22) Anmeldetag: **16.06.2005**

(54) **Vorrichtung und Verfahren zur Bedämpfung mindestens einer Starrkörpereigenform und/oder mindestens einer elastischen Eigenbewegungsform eines Luftfahrzeuges**

Device and Method for attenuating at least one rigid body mode and/or at least one elastic mode of an aircraft

Dispositif et procédé pour amortir au moins un mode d'un corps rigide et/ou au moins un mode élastique d'un aéronef

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **16.06.2004 DE 102004029194**
**02.09.2004 US 606602 P**

(43) Veröffentlichungstag der Anmeldung:
**21.12.2005 Patentblatt 2005/51**

(73) Patentinhaber: **Airbus Deutschland GmbH**
**21129 Hamburg (DE)**

(72) Erfinder:
• **Enzinger, Michael**
**21629 Neu-Wulmstorf (DE)**
• **Kordt, Michael**
**22587 Hamburg (DE)**

(74) Vertreter: **Maiwald Patentanwalts GmbH**
**Elisenhof**
**Elisenstrasse 3**
**80335 München (DE)**

(56) Entgegenhaltungen:
**EP-A- 0 293 018        US-A1- 2003 205 644**

• **TRAN C B ET AL: "AIRCRAFT FORE AND AFT MODAL SUPPRESSION SYSTEM" PROCEEDINGS OF THE CONFERENCE ON DECISION AND CONTROL. LOS ANGELES, DEC. 9 - 11, 1987, NEW YORK, IEEE, US, Bd. VOL. 3 CONF. 26, 9. Dezember 1987 (1987-12-09), Seiten 2337-2340, XP002010955**

## Beschreibung

Die Erfindung betrifft eine Vorrichtung zur Bedämpfung mindestens einer Starrkörpereigenform und/ oder mindestens einer elastischen Eigenbewegungsform eines Luftfahrzeugs, insbesondere zur Böenlastabminderung, Stabilitäts- und Komforterhöhung bei einem Flugzeug, mit mindestens einem Sensormittel sowie mit einer mit dem oder den Sensormitteln verbundenen Regeleinrichtung und mindestens einem auf Steuer-, Leit- und/oder Regelflächen des Luftfahrzeugs einwirkenden Aktuator.

Weiterhin betrifft die Erfindung ein Verfahren zur Bedämpfung mindestens einer Starrkörpereigenform und/oder mindestens einer elastischen Eigenbewegungsform eines Luftfahrzeugs, insbesondere zur Böenlastabminderung, Stabilitäts- und Komforterhöhung bei einem Flugzeug, mit mindestens einem Sensormittel sowie mit einer mit dem oder den Sensormitteln verbundenen Regeleinrichtung und mindestens einem auf Steuer-, Leit- und/oder Regelflächen des Luftfahrzeugs einwirkenden Aktuator.

Die erfindungsgemäße Vorrichtung bzw. das erfindungsgemäße Verfahren hat die Absenkung beliebiger lokaler und globaler Strukturlasten in Luftfahrzeugen, die durch böen- und/oder manöverinduzierte Anregung von Starrkörpereigenformen und/oder elastischen Eigenformen hervorgerufen werden, zum Ziel. Hierbei ist der Ausdruck "Starrkörpereigenform" die Kurzbezeichnung für den Begriff "Starrkörpereigenbewegungsform" und die Bezeichnung der "elastischen Eigenbewegung" ist die abgekürzte Fassung des Fachbegriffs der "elastischen Eigenbewegungsform". Der darüber hinaus hier verwendete Kurzbegriff "Mode" bezieht sich auf eine Starrkörpereigenform und/oder eine elastische Eigenbewegungsform des Luftfahrzeugs.

Daneben dient die erfindungsgemäße Vorrichtung bzw. das erfindungsgemäße Verfahren der Komforterhöhung sowie der Stabilitätserhöhung des Luftfahrzeugs durch eine Bedämpfung der entsprechenden Starrkörpereigenformen und/oder elastischen Eigenformen.

Aus dem Stand der Technik siehe EP 0 293 018, US 2003/02 05644 oder XP002010955, sind eine Vielzahl von Regelungssystemen zur Abminderung von Starrkörpereigenformen und/oder elastischen Eigenformen - im Allgemeinen auch als Moden bezeichnet - in Luftfahrzeugen bekannt. Als theoretisch optimal stellt sich beispielsweise der Entwurf eines Regelungssystems mit einer Zustandsvektorrückführung dar, der allerdings bislang an der Notwendigkeit eines "exakten Beobachters", der einen sehr hohen Rechenaufwand impliziert, gescheitert ist.

Alternativ lassen sich die auf das Flugzeug zurückzuführenden Eigenbewegungen entsprechend einer Rücktransformation vom modalen in den physikalischen Raum messtechnisch durch eine Linearkombination verschiedener Beschleunigungswerte, ermitteln. Um in diesem Fall jedoch mit einer geringeren Anzahl an Sensoren auszukommen, ist hierbei zur Bandbegrenzung eine Filterung des Signals, meist mit Filtern niedriger Ordnung, erforderlich.

Als weitere Möglichkeit zur Bestimmung des zurückzuführenden Signals aus nur einer Messgröße wird im Stand der Technik beispielsweise eine aufwändige Filterung angewandt. Hierbei handelt es sich um ein subtraktives Verfahren, bei dem aus dem Messsignal durch eine Hintereinanderschaltung von Tiefpassfiltern und Kerbfiltern alle Signalanteile bis auf die gewünschte Eigenbewegungsform herausgefiltert werden.

Weiterhin ist oftmals eine Anpassung des Regelungssystems an die sich, beispielsweise infolge der Massenänderung durch den stetigen Kraftstoffverbrauch, ändernden Eigenfrequenzen des Flugzeugs notwendig.

In Bezug auf die Auswahl und die Ansteuerung der Steuer-, Leit- und Regelflächen sind bei bekannten Regelungssystemen bislang nur integrale Indikatoren, beispielsweise die Absenkung des Effektivwertes einer Last oder einer Beschleunigung an einer bestimmten Position, in Betracht gezogen worden.

Bisherige Regelungssysteme betreffen darüber hinaus meist spezielle Lösungen für ganz bestimmte Schwingungsprobleme, bei denen es sich in der Regel um Komfortprobleme handelt. Damit ist die Anwendbarkeit derartiger Regelungssysteme auf die Rumpfstruktur eines Flugzeugs beschränkt und nicht ohne weiteres auf andere Komponenten übertragbar. Auch ist es bislang aufgrund des hohen Rechenaufwandes mit vertretbarem Aufwand nur möglich, eine stark begrenzte Anzahl von Moden zu beeinflussen. Hierbei handelt es sich meist um eine Starrkörpereigenform oder den ersten Rumpf- oder Flügelbiegemode. Um das nötige Rückführungssignal zu erzeugen, müssen hierbei mehrere Beschleunigungssensoren verwendet werden, was nicht nur den systemtechnischen Aufwand, sondern auch die Ausfallwahrscheinlichkeit erhöht.

Regelungssysteme, die aus einem Messsignal mittels einfacher Filterung einen bestimmten Mode ermitteln, sind zwar technisch realisierbar, regen allerdings aufgrund der - trotz der erfolgten Bandbegrenzung - immer noch zu breitbandigen Zurückführung andere, unerwünschte Eigenbewegungen des Flugzeugs an und beeinflussen damit das Flugzeugverhalten negativ. Hieraus ergeben sich wiederum Nachteile im Bereich des Flugverhaltens sowie eine Lasten- und Beschleunigungserhöhung an anderen Bestandteilen des Flugzeugs.

Um den aufgezeigten Problemen zu begegnen, wird bei bekannten Regelungssystemen der modale Reglerentwurf angewendet. Die modale Rückführung erfordert jedoch einen sehr großen Systemaufwand, da im Prinzip für jede zu beeinflussende Eigenbewegung auf einem rechenintensiven Weg ein individuelles Rückführungssignal erzeugt werden muss. Dies bedeutet, dass aus einem Messsignal sämtliche Eigenformen, bis auf die Gewünschte, mit Kerbfiltern in einem subtraktiven Verfahren herausgefiltert werden müssen. Nach einer anschließenden Phasenkorrektur kann das Signal dann auf die Steuer-, Leit- und Regelflächen aufgeschaltet werden. Da nun jede Eigenbewegungsform eine andere Phasenkorrektur erfordert, muss entsprechend für jede Eigenbewegungsform ein solcher Zweig aufgebaut werden. Dadurch ist es nicht möglich, im Messsignal mehr als eine Eigenbewegungsform übrig zu lassen, da die Phase nur für eine Eigenbewegungsform angepasst werden kann.

Allen bekannten Regelungssystemen ist gemein, dass ihre Auslegung mit einem hohen Optimierungsaufwand verbunden ist. Die Zielfunktionen sind in derartigen Optimierungen zumeist Effektivwerte der Last oder der Beschleunigung an einer bestimmten Rumpfposition des Flugzeugs, was zur Folge hat, dass die eventuelle Anregung anderer Eigenbewegungsformen nicht erkannt wird.

Im Gegensatz hierzu verfolgt die erfindungsgemäße Vorrichtung bzw. das erfindungsgemäße Verfahren die gezielte Absenkung einzelner Lastspitzen im Last- oder Beschleunigungsspektrum der Rumpfstruktur, nicht nur die Absenkung eines integralen Wertes von mehreren Moden.

Weiterhin werden bei bekannten Regelungssystemen die Steuer-, Leit- und Regelflächen nur nach ihrer globalen, durch Effektivwerte gekennzeichneten Wirksamkeit auf bestimmte Lastprobleme ermittelt. Werden die Steuer-, Leit- und Regelflächen jedoch nicht optimal an die Eigenbewegungsformen angepasst, so werden auch bei einem optimalen Rückführungssignal weitere Eigenbewegungsformen beeinflusst. Bislang wird in der Regel lediglich eine Steuer-, Leit- oder Regelfläche ausgewählt. Diese führt zu einem sehr niedrigen Wirkungsgrad der bekannten Regelungssysteme, so dass größere Steuerausschläge und damit längere Aktuatorwege erforderlich werden. Hieraus folgen einerseits eine Erhöhung des Luftwiderstandes und andererseits ein gesteigerter Aktuatorverschleiß.

Der Erfindung liegt die Aufgabe zu Grunde, eine Vorrichtung sowie ein Verfahren zur Bedämpfung von Starrkörpereigenformen und/oder elastischen Eigenbewegungsformen von Luftfahrzeugen zu schaffen, welches die aufgezeigten Nachteile der vorbekannten Regelungssysteme vermeidet.

Die Aufgabe wird erfindungsgemäß durch dem Gegenstand der Ansprüche 1 und 9 gelöst.

Dadurch, dass nach Patentanspruch 1 mittels der Regeleinrichtung jeweils mindestens eine Starrkörpereigenform und/oder mindestens eine elastische Eigenbewegungsform des Luftfahrzeugs modifizierbar ist, ergibt sich eine signifikante Absenkung von Starrkörpereigenbewegungen und/oder elastischen Eigenbewegungsformen des Luftfahrzeugs und damit eine erhebliche Absenkung der Strukturlasten.

Dadurch, dass nach Patentanspruch 10 mittels der Regeleinrichtung jeweils mindestens eine Starrkörpereigenform und/oder mindestens eine elastische Eigenbewegungsform des Luftfahrzeugs modifiziert wird, ergibt sich eine signifikante Absenkung von Starrkörpereigenbewegungen und/oder elastischen Eigenbewegungsformen des Luftfahrzeugs und damit eine erhebliche Absenkung der Strukturlasten.

Erfindungsgemäß sind die Starrkörpereigenbewegungen und/oder elastischen Eigenbewegungsformen des Luftfahrzeugs, die zu Last-, Komfort- oder Stabilitätsproblemen führen können, mit Hilfe von am Luftfahrzeug angeordneten sowie mittels der Regeleinrichtung kontrollierten Steuer-, Leit- und Regelflächen absenkbar. Die Regelung erfolgt dabei in Abhängigkeit von sensorerfassten und mittels Filterelementen aufbereiteten Messwerten. Die Regelung ist in selektierten, schmalen Frequenzbereichen der Starrkörpereigenbewegung und/oder der elastischen Eigenbewegungsform des Luftfahrzeugs wirksam. Zunächst ist der erfindungsgemäße Ansatz völlig allgemein und kann nach einer erprobten Vorgehensweise auf beliebige lokale und/oder globale Last-, Stabilitäts- und Komfortprobleme oder Kombinationen dieser Probleme in Luftfahrzeugen aller Art angewendet werden.

Der Vorteil der Erfindung liegt insbesondere darin, dass die erfindungsgemäße Vorrichtung bzw. das erfindungsgemäße Verfahren frequenzselektiv arbeitet und somit von Seiten der Aufbereitung des Rückführungssignals bei der Modifizierung einer bestimmten Eigenbewegungsform in der Regel alle weiteren unbeeinflusst bleiben. Dadurch werden weder die zu erhaltenden Starrkörpereigenbewegungen, noch die zu erhaltenden elastischen Eigenbewegungen negativ beeinflusst.

Ausgangsseitig basiert die erfindungsgemäße Vorrichtung bzw. das erfindungsgemäße Verfahren auf einem modalen Kriterium, das die Phasenlage und die Amplitudenverteilung der. Steuer-, Leit- und Regelflächen nach der Beschaffenheit des Eigenvektors der relevanten Eigenbewegungsform auslegt. Dadurch ist gewährleistet, dass auch bei einem optimalen Rückführungssignal keine weiteren Eigenbewegungsformen, außer der zu beeinflussenden, modifiziert werden. Bei optimaler Anpassung der Ausschläge der Steuer-, Leit- und Regelflächen in Bezug auf Amplitude und Phase erreicht man eine maximale Beeinflussung der im Sinne der Auslegung zu modifizierenden Eigenbewegungsformen bei minimalem Steuerungsaufwand, Im Vergleich zu bekannten Regelungssystemen bzw. -verfahren reduziert sich der Steuerungsaufwand auf 10 - 15 %. Hierdurch erhöht sich die Lebensdauer der Aktuatoren bei einer gleichzeitigen Verringerung des Luftwiderstandes und einer hierdurch bedingten Reduzierung des Kraftstoffverbrauchs.

Darüber hinaus kommt die erfindungsgemäße Vorrichtung bzw. das erfindungsgemäße Verfahren mit nur einem (Beschleunigungs-) Sensor aus, wodurch eine hohe Verfügbarkeit und Ausfallsicherheit erreicht wird. Gleichzeitig erhöht die Verwendung eines internen Sensors die Verfügbarkeit, da dieser nicht durch äußere Einflüsse, beispielsweise durch Vogelschlag etc. beeinflussbar ist. Weiterhin ist es möglich, dass die erfindungsgemäße Vorrichtung einen bereits vorhandenen Sensor mitbenutzt, sodass keine weitere Zusatzausrüstung notwendig ist.

Durch die Erfindung wird der erforderliche Systemaufwand erheblich gesenkt, da zum einen nur die Verwendung eines Sensors erforderlich ist und zum anderen eine optimierte, additive Filterstruktur Verwendung findet.

Diese Reduzierung des Systemaufwandes im Verhältnis zu bekannten Regelungssystemen ist durch die Verwendung von Resonanzfiltern möglich, die bei einer geringen Systemordnung bereits die Möglichkeit bieten, schmale Frequenzintervalle aus dem Messsignal auf die Aktuatoren und damit auf die Steuer-, Leit-, und/oder Regelflächen zurückzuführen. Dadurch bleiben von der Signalseite her alle nicht zu modifizierenden Eigenformen, aufgrund deren Ausschluss aus dem Rückführungssignal, unbeeinflusst. Die Reduktion des erforderlichen Ordnungsgrades der Filter beträgt ungefähr zwischen 60 und 70 % im Vergleich zu bekannten subtraktiven Verfahren.

Ferner ergibt sich ein großer Zeitvorteil in der Entwurfsphase der erfindungsgemäßen Vorrichtung, da sich alle Parameter analytisch bestimmen lassen, sodass ausgedehnte Optimierungen entbehrlich werden. Hierdurch ergibt sich eine Zeitersparnis in der Entwurfsphase von 80 bis 90 % im Vergleich zu anderen Verfahren.

Nach einer vorteilhaften Ausgestaltung der Erfindung ist vorgesehen, dass der Regeleinrichtung ein die Frequenz mindestens einer Starrkörpereigenform und/oder mindestens einer elastischen Eigenbewegungsform repräsentierendes Frequenzsignal einer Frequenzmesseinrichtung zuführbar ist. Hierdurch ist eine optimale Anpassung der erfindungsgemäßen Vorrichtung bei sich verändernden physikalischen Randbedingungen, beispielsweise bei einem Masseverlust des Luftfahrzeugs infolge kontinuierlichen Treibstoffverbrauchs gegeben. Weiterhin erhöht sich hierdurch die Sicherheit gegenüber Modellierungsfehlern, die aus der Entwurfsphase herrühren. Die Erfassung und Analyse der Starrkörpereigenformen sowie der elastischen Eigenbewegungen des Luftfahrzeugs zur Anpassung der erfindungsgemäßen Vorrichtung müssen hierbei nicht in Echtzeit erfolgen. Da sich die massenabhängigen Frequenzen nur langsam ändern, genügt ein regelmäßiges, in mittleren Zeitabständen erfolgendes Nachprüfen und gegebenenfalls Nachkalibrieren der erfindungsgemäßen Vorrichtung.

Die erfindungsgemäße Vorrichtung bzw. das erfindungsgemäße Verfahren zeichnen sich insbesondere dadurch aus, dass eine Berücksichtigung des Eigenvektors der zu modifizierenden Starrkörpereigenformen und/oder elastischen Eigenformen bei der Auswahl der Steuerflächen zur Maximierung des Wirkungsgrades und die technische Umsetzung der Vorrichtung mit Resonanzfiltern zur Sicherstellung eines geringen Systemaufwandes erfolgt.

Weitere vorteilhafte Ausgestaltungen der Vorrichtung sind in weiteren Patentansprüchen niedergelegt.

In der Zeichnung zeigt:

**Fig. 1** Schematische Darstellung von zwei Biegemoden an einem Luftfahrzeug,

**Fig. 2** einen Verlauf der auf die maximale Querkraft $Q_{Ymax}$ normierten Querkraft $Q_Y$ aufgetragen über die normierte Rumpflänge eines Flugzeugs im Fall einer Anregung mit lateralen Böen,

**Fig. 3** ein Spektrum der auf die maximale Querkraft $Q_{Ymax}$ normierten Querkraft $Q_Y$ aufgetragen über die auf eine maximale Frequenz $f_{max}$ normierte Frequenz $f$ in einem vorderen Rumpfbereich des Flugzeugs mit einem dominanten Mode,

**Fig. 4** ein Beschleunigungsspektrum im Bereich der Position eines Sensormittels mit einem dominanten Mode,

**Fig. 5** Schematischer Aufbau der erfindungsgemäßen Vorrichtung,

**Fig. 6** detaillierter Aufbau einer Regeleinrichtung zur Modifizierung eines Modes,

**Fig. 7** Verlauf der auf die maximale Querkraft $Q_{Ymax}$ normierten Querkraft $Q_Y$ aufgetragen über die normierte Rumpflänge des Flugzeugs ohne und mit Einsatz der erfindungsgemäßen Vorrichtung,

**Fig. 8** Spektrum der auf die maximale Querkraft $Q_{Ymax}$ normierten Querkraft $Q_Y$ aufgetragen über die auf eine maximale Frequenz $f_{max}$ normierte Frequenz $f$ im vorderen Rumpfbereich des Flugzeugs ohne und mit Einsatz der Vorrichtung,

**Fig. 9** Beschleunigungsspektrum $n_y/n_{ymax}$ aufgetragen über die auf eine maximale Frequenz $f_{max}$ normierte Frequenz $f$ im Bereich des Sensormittels im vorderen Rumpfbereich des Flugzeugs ohne und mit Einsatz der Vorrichtung,

**Fig. 10** Aufbau der Vorrichtung zur gleichzeitigen Modifizierung mehrerer Moden und

**Fig. 11** den Verlauf der auf die maximale Querkraft $Q_{Ymax}$ normierten Querkraft $Q_Y$ aufgetragen über die normierte Rumpflänge des Flugzeugs bei der Bedämpfung mehrerer Moden ohne und mit Einsatz der Vorrichtung.

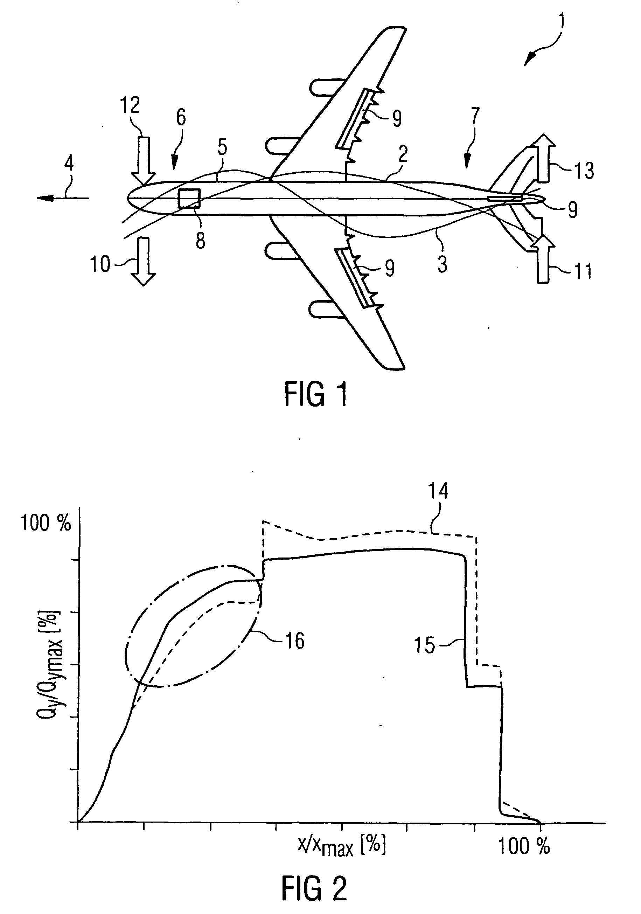

Die **Fig. 1** zeigt ein Flugzeug 1, dessen Rumpf in einem ersten und einem zweiten Biegemode 2, 3 schwingt. Das Flugzeug 1 bewegt sich in der Darstellung der Fig. 1 in der Flugrichtung 4. Der Begriff "Mode" wird im Weiteren zur Abkürzung für die Begriffe "Starrkörpereigenform", "Starrkörpereigenbewegungsform" bzw. "elastischen Eigenbewegung" verwendet. Das Flugzeug 1 weist einen Rumpf 5, eine Nase 6 sowie ein Heck 7 auf. Im Bereich der Nase 6 ist ein Sensormittel 8 angeordnet. Im Bereich des Hecks 7 sind Steuer-, Leit- und Regelflächen 9, beispielsweise in der Form von Querrudern, Trimflächen, Spoilern und Seitenrudern, angeordnet.

Mit einem festen Regelgesetz ist es nicht möglich, zwei benachbarte Eigenbewegungen des Flugzeugs 1 mit dicht aneinander liegenden Frequenzen sowie verschiedenen Phaseniagen (Knotenzahl) wirksam zu bedämpfen. Denn die Phasenlage kann jeweils nur an eine Eigenbewegung angepasst werden. Bewegt sich beispielsweise die Nase 6 des Flugzeugs 1 in Richtung des Pfeils 10 mit einer bestimmten Geschwindigkeit v, so müsste nach Maßgabe eines hier beispielsweise angenommenen Regelgesetzes eine Kraft F am Heck 7 in Richtung des Pfeils 11 einwirken. Würde die Regeleinrichtung nun nach Maßgabe dieses Regelgesetzes für alle Moden gleich verfahren, so würde der zweite Biegemode 3 unbeabsichtigt mit angeregt werden. Hierbei bewegt sich die Nase 6 in Richtung eines Pfeils 12 mit einer Geschwindigkeit v und eine Kraft F in Richtung des Pfeils 13 würde im Bereich des Hecks 7 auf dieses, gesteuert von der Regeleinrichtung, einwirken. Im Ergebnis würde die Anwendung des gleichen Regelgesetzes auf den ersten und den zweiten Biegemode 2,3 zu einer Destabilisierung des 2. Biegemodes führen.

Die **Fig. 2** zeigt den Verlauf der auf die maximale Querkraft $Q_{Ymax}$ normierten Querkraft $Q_Y$ aufgetragen über die normierte Rumpflänge eines Flugzeugs im Fall einer Anregung mit kontinuierlichen Böen. Auf der Hochachse des Diagramms ist der Verlauf der Querkraft $Q_Y$ jeweils bezogen auf eine maximale Querkraft über einer bestimmten Position $x/x_{max}$ am Rumpf 5 des Flugzeugs 1 aufgetragen. Ein Kurvenverlauf 14 repräsentiert die maximal zulässige Querkraft $Q_Y$ in der jeweiligen Position $x/x_{max}$ im Rumpf des Flugzeugs 1. Ein Kurvenverlauf 15 spiegelt den tatsächlichen Verlauf der Querkraft $Q_Y$ wieder, der sich ohne den Einsatz der erfindungsgemäßen Vorrichtung ergibt. Aus der Darstellung der Fig. 2 ist ersichtlich, dass sich in einem Bereich der Hervorhebung 16 eine Überlastung der Rumpfstruktur bzw. des Rumpfes 5 des Flugzeugs 1 ergibt. Dieser Bereich befindet sich zwischen der Nase 6 und dem Bereich des Rumpfes 5, in dem üblicherweise die Tragflächen angeordnet sind. In diesem Bereich ist der zulässige Maximalwert der Querkraft $Q_Y$ deutlich überschritten, wie der innerhalb der Hervorhebung 16 sich oberhalb des Kurvenverlaufs 14 erstreckende Kurvenverlauf 15 zeigt.

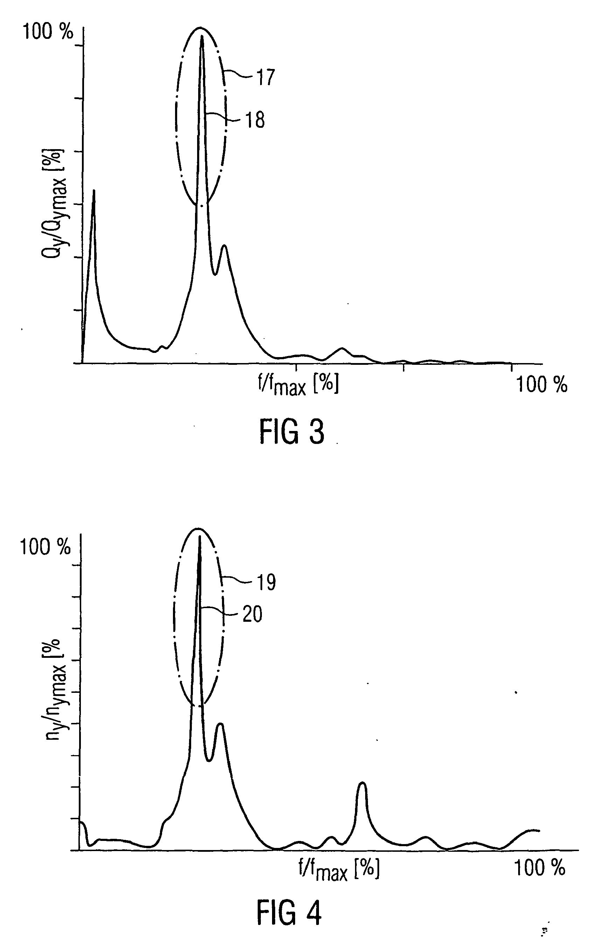

Die **Fig. 3** zeigt ein Spektrum der auf die maximale Querkraft $Q_{Ymax}$ normierten Querkraft $Q_Y$ für eine Position am vorderen Rumpf, aufgetragen über die auf eine maximale Frequenz $f_{max}$ normierte Frequenz f des Flugzeugs 1 mit einem dominanten Mode.

Auf der Hochachse des Diagramms ist der Verlauf der Querkraft $Q_Y$ jeweils bezogen auf eine maximale Querkraft $Q_{Ymax}$ bei einer bestimmten normierten Frequenz $f/f_{max}$ aufgetragen. Im Bereich einer Hervorhebung 17 ist deutlich ein dominanter elastischer Mode 18 zu erkennen, der maßgeblich zu erhöhten Lastwerten innerhalb der Rumpfstruktur bzw. des Rumpfes 5 des Flugzeugs 1 beiträgt.

Das in der **Fig. 4** dargestellte Schaubild illustriert ein Beschleunigungsspektrum im Bereich der Position eines Sensormittels mit einem dominanten Mode. Das Sensormittel 8 befindet sich hierzu vorzugsweise im vorderen Rumpfbereich des Flugzeugs 1. Auf der Hochachse des Diagramms ist der Verlauf der Beschleunigung $n_Y/n_{Ymax}$ bei bestimmten normierten Frequenzen $f/f_{max}$ aufgetragen. Im Bereich einer Hervorhebung 19 zeigt sich wiederum eine dominante Eigenbewegung 20. Das Maximum dieser dominanten Eigenbewegung 20 liegt in einem Bereich von etwa 33 % der maximalen Frequenz $f_{max}$.

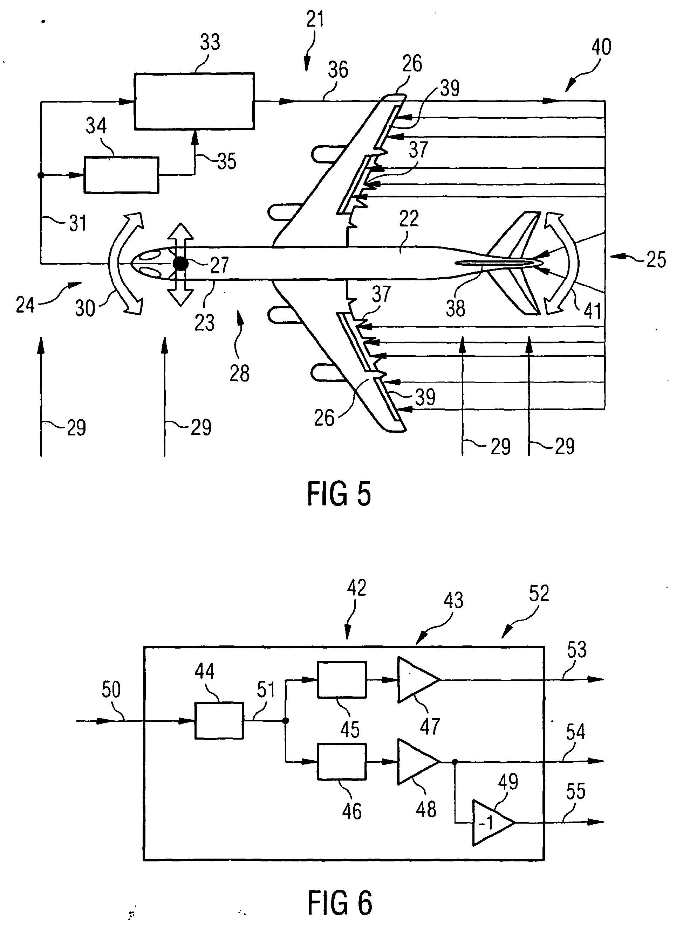

In der **Fig. 5** ist der schematische Aufbau der erfindungsgemäßen Vorrichtung 21 dargestellt. Die Darstellung der Fig. 5 bezieht sich im Wesentlichen auf die Messung der lateralen Beschleunigung $n_Y$ in einem vorderen Rumpfbereich eines Flugzeugs 22. Das Flugzeug 22, beispielsweise ein großes Transport- oder Passagierflugzeug in einer Langversion, weist einen Rumpf 23, eine Nase 24, ein Heck 25 sowie Tragflächen 26 auf. Im Bereich der Nase 24 ist ein Sensormittel 27 angeordnet. Ein vorderer Rumpfbereich 28 des Flugzeugs 22 wird von (Quer-)Böen 29 lateral belastet. Das Sensormittel 27 dient zur Messung der, infolge der auf den Rumpf 23 auftreffenden Böen 29 entstehenden lateralen Beschleunigungswerte $n_Y$. Infolge der Böen 29 werden im Rumpf 23 Starrkörpereigenformen und/oder elastische Flugzeugeigenbewegungsformen angeregt, wie durch die Pfeile 30,41 symbolisiert. Ein vom Sensormittel 27 abgegebenes Messsignal 31 wird nach einer entsprechenden messtechnischen Aufbereitung, beispielsweise in einem hier nicht dargestellten Verstärker und/oder in einem Antialiasingfilter einer Regeleinrichtung 33 und einer Frequenzmesseinrichtung 34 parallel zugeleitet. Von der Frequenzmesseinrichtung 34 wird ein Frequenzsignal 35 der Regeleinrichtung 33 zugeführt. Das Frequenzsignal 35 repräsentiert die Frequenz mindestens einer Starrkörpereigenform und/oder mindestens einer elastischen Eigenbewegung des Flugzeugs 22. Die Frequenzmesseinrichtung 34 leitet das Frequenzsignal 35 ebenfalls aus dem Messsignal 31 des Sensormittels 27, beispielsweise durch eine digitale Analyse innerhalb einer Digitalrechnereinheit, ab. Für den Betrieb der erfindungsgemäßen Vorrichtung 21 ist daher in der Regel ein Sensormittel 27, beispielsweise in der Form eines Beschleunigungssensors zur Erfassung einer Querbeschleunigung $n_Y$ ausreichend. Entsprechend können auch Beschleunigungen in anderen Raumrichtungen erfasst werden, wozu dann modifizierte Sensormittel 27 vorgesehen werden müssen.

Innerhalb der Regeleinrichtung 33 wird ein gemischtes (mehrere Leitungen umfassendes) Rückführungssignal 36 gebildet, das über in der Darstellung der Fig. 5 nicht näher dargestellte Aktuatoren auf Steuer-, Leit- und Regelflächen 40 des Flugzeugs 22, beispielsweise Querruder 39, Seitenruder 38, Spoiler 37 sowie andere Leit- und Trimflächen, wie zum Beispiel Höhenruder, "Mini-Teds", "Tabs", "Gourney-Flaps", "Canards" etc., wieder zurückgeführt wird. Die Wirkung des von der Regeleinrichtung 33 über die Aktuatoren wiederum auf das Flugzeug 22 zurückgeführte Rückführungssignal 36 ist durch den Pfeil 41 symbolisiert.

Infolge der vom Sensormittel 27 erfassten Starrkörpereigenformen und/oder elastischen Eigenbewegungen des Flugzeugs 22, die in der Regeleinrichtung 33 einer geeigneten Modifikation zur Bedämpfung der unerwünschten Moden unterzogen werden und anschließend als Rückführungssignal 36 mittels der Aktuatoren über die Steuer-, Leit- und Regelflächen 40 auf das Flugzeug 22 zurückgeführt werden, ergibt sich eine wirkungsvolle Bedämpfung mindestens einer Starrkörpereigenform und/oder mindestens einer elastischen Eigenbewegung des gesamten Flugzeugs 22.

Die **Fig. 6** zeigt den detaillierten Aufbau der Regeleinrichtung zur Modifizierung eines Modes.
Die Regeleinrichtung 42 umfasst im Wesentlichen einen Regelstrang 43. Der Regelstrang 43 ist aus einem Resonanzfilter 44, den Phasenkorrektureinheiten 45,46, den Verstärkungsfaktoreinheiten 47, 48 und einer Negierungseinheit 49 gebildet.

Dem Resonanzfilter 44 wird ein Messsignal 50, beispielsweise in der Form von lateralen Beschleunigungswerten $n_y$, die ein Sensormittel in einem vorderen Rumpfbereich des Flugzeugs erfasst, zugeführt. Ein Signal 51 des Resonanzfilters 44 wird dann parallel auf die Phasenkorrektureinheiten 45,46 geleitet. Den Phasenkorrektureinheiten 45,46 ist jeweils eine der Verstärkungsfaktoreinheiten 47,48 nachgeschaltet. Der Verstärkungsfaktoreinheit 48 ist eine Negierungseinheit 49 nachgeordnet. Die Verstärkungsfaktoreinheiten 47,48 sowie die Negierungseinheit 49 bilden mehrere Rückführungssignale 52, die über in der Fig. 6 nicht näher dargestellte Aktuatoren auf Steuer-, Leit- oder Regelflächen des Flugzeugs zurückgeführt werden. Infolge der Aufschaltung der Rückführungssignale 52 auf entsprechende Steuer-, Leit- oder Regelflächen des Flugzeugs, insbesondere auf Querruder, Seitenruder, Spoiler, Leit-, Trimflächen oder dergleichen, ergibt sich eine Bedämpfung mindestens einer Starrkörpereigenform und/oder mindestens einer elastischen Eigenbewegung des gesamten Flugzeugs. Im konkreten Ausführungsbeispiel der Fig. 6 wird beispielsweise ein Rückführungssignal 53 auf ein Seitenruder des Flugzeugs, ein Rückführungssignai 54 auf mindestens ein Querruder des Flugzeugs und ein Rückführungssignal 55 auf mindestens einen Spoiler, eine Trimfläche oder dergleichen des Flugzeugs zurückgeführt.

Die Negierungseinheit 49 ermöglicht einen einfacheren Aufbau der Regeleinrichtung 42. Denn das Rückführungssignal 54 zur Betätigung der Aktuatoren für die Querruder und das Rückführungssignal 55 zur Ansteuerung der Aktuatoren zur Betätigung der Spoiler weisen zueinander eine Phasenverschiebung von 180° auf, sodass sich mittels der Negierungseinheit 49 aus dem Rückführungssignal 54 für die Querruder das Rückführungssignal 55 zur Ansteuerung der Spoiler mittels einer einfachen Vorzeichenumkehr in der Negierungseinheit 49 bilden lässt. Hierdurch lässt sich eine Phasenkorrektureinheit einsparen.

Entsprechend der Anzahl der zu beeinflussenden Eigenbewegungsformen bzw. der elastischen Eigenbewegungsformen des Flugzeugs müssen mehrere Regelstränge bzw. Regelzweige parallel geschaltet werden. In bevorzugter Weise weist die Regeleinrichtung 42 im Rahmen der Signalaufbereitung für jede zu modifizierende Starrkörpereigenform und/oder elastische Eigenbewegung des Flugzeugs einen separaten Regelstrang auf, der im Aufbau dem Regelstrang 43, der im Rahmen der Erläuterung der Fig. 6 weiter oben beschrieben wurde, entspricht. Zur Signalaufbereitung innerhalb der Regeleinrichtung 42 sind im Allgemeinen Filtermittel dritter Ordnung ausreichend. Alternativ können aber auch Filtermittel höherer oder niedrigerer Ordnung vorgesehen sein.

Als Filtermittel zweiter Ordnung kommt im gezeigten Ausführungsbeispiel der Fig. 6 das Resonanzfilter 44 zum Einsatz. Das Messsignal 50 wird zunächst dem Resonanzfilter 44 zugeführt. Der Resonanzfilter 44 folgt hierbei der Übertragungsfunktion

$$"\ddot{U}F = \frac{2 \cdot D \cdot \omega_0^2}{s^2 + 2 \cdot D \cdot \omega_0 \cdot s + \omega_0^2}".$$ Die Phasenkorrektureinheiten 45,46 erster Ordnung gehorchen der

Übertragungsfunktion $"\ddot{U}F = \frac{-c \cdot s + 1}{c \cdot s + 1}".$ Weiterhin sind zwei Verstärkungsfaktoreinheiten 47,48 vorgesehen, die den Phasenkorrektureinheiten 45,46 nachgeordnet sind. In den obigen Übertragungsfunktionen entspricht D der Dämpfung und $\omega_0$ entspricht der ungedämpften Eigenfrequenz des Resonanzfilters 44. Mittels der Konstante $c$ lässt sich die Phasenverschiebung in den Phasenkorrektureinheiten 45,46 einstellen. Die Aufgabe des Resonanzfilters 44 besteht in einer diskreten Echtzeit-Fourier-Analyse. Damit steht eine systemtechnisch einfach zu realisierende Möglichkeit zur Verfügung, Informationen über den gesuchten Schwingungsmode aus dem physikalischen Summensignal in Gestalt des Messsignals 50, das vom Sensormittel in Form eines diskreten Beschleunigungssignals vorliegt, zu erlangen. Die Regeleinrichtung 42 ist in einer bevorzugten Ausführungsform der Erfindung mittels einer digitalen Rechnereinheit realisiert.

Die Dimensionierung der in den Übertragungsfunktionen enthaltenen Parameter bedarf einer genauen Analyse der Starrkörpereigenformen und der elastischen Eigenbewegung des Flugzeugs, in dem die erfindungsgemäße Vorrichtung eingesetzt werden soll.

Das Resonanzfilter 44 ist zum einen durch seine Resonanzfrequenz charakterisiert, die der Resonanzfrequenz der zu modifizierenden Flugzeugeigenbewegung und/oder elastischen Eigenbewegungsform entspricht und zum anderen durch seine Dämpfung, die möglichst gering ausfallen sollte, um die geforderte Schmalbandigkeit des Resonanzfilters 44 zu erreichen.

Die einfache Form des Resonanzfilters 44 verdeutlicht den Vorzug der hier gewählten selektiven Vorgehensweise gegenüber vorbekannten Regelungssystemen. Mit lediglich einem Filter zweiter Ordnung mit nur zwei leicht festzulegenden Parametern pro Mode kann die gewünschte Signalinformation über den zu bedämpfenden Mode, d.h. der zu bedämpfenden Starrkörpereigenform und/oder der zu bedämpfenden elastischen Eigenbewegungsform, mittels der Vorrichtung bzw. nach dem Verfahren direkt selektiert werden. Dagegen müssen beim subtraktiven Verfahren nach Maßgabe des Standes der Technik im Falle eines Flugzeuges mit n Moden bis zu n-1 unerwünschte Moden herausgefiltert werden. Das heißt es entsteht der (n-1)-fache Aufwand im Entwurf und in der Ausführung derartiger Regelungssysteme.

Die anschließende Modifikation der Phase in den Phasenkorrektureinheiten 45,46 dient der Kompensation der Sensortotzeit, der Signalverarbeitungszeit in der Regeleinrichtung 42, der Phasenverzögerung der Aktuatoren, der Phasenverzögerung der instationären Aerodynamik des Flugzeugs, der Bereitstellung der gemischten Rückführungssignale 52 (Synthese aus Geschwindigkeit und Beschleunigung) sowie der Phasenlage des komplexen Eigenvektors der relevanten zu bedämpfenden Eigenbewegungsform des Flugzeugs.

Die gemischten Rückführungssignale 52 dienen zur Erhaltung der Resonanzfrequenz der zu modifizierenden Eigenbewegungsform im geschlossenen Regelkreis. Dies ist notwendig, um die Funktionsfähigkeit des Resonanzfilters 44 zu gewährleisten. Unter dem Begriff der "gemischten Rückführung" ist in diesem Zusammenhang die kombinierte Rückführung von Beschleunigungs- und Geschwindigkeitssignalen zu verstehen. Das Geschwindigkeitssignal wird durch die Filterung aus dem Beschleunigungssignal gewonnen, sodass hierfür kein zusätzliches, separates Sensormittel erforderlich ist. Die Berücksichtigung der Phasenlage und der lokalen Amplitudenwerte des komplexen Eigenvektors der Bewegung ermöglicht eine optimale Anpassung der Regeleinrichtung 42 an die Eigenbewegungsform des Flugzeugs.

Der erfindungsgemäßen Vorrichtung bzw. dem erfindungsgemäßen Verfahren liegt eine modale Betrachtung und ein daraus abgeleitetes Kriterium zur Phasen- und Amplitudenanpassung der Leit-, Steuer- und Regelflächen-Ausschläge mittels der Verstärkungsfaktoreinheiten 47,48 an den Eigenvektor der zu modifizierenden elastischen Eigenbewegung und/oder der Starrkörpereigenform zu Grunde.

Hiermit wird einerseits die maximale Beeinflussbarkeit der Bewegung bei einem minimalen Steuerungs- und Regelaufwand erreicht und andererseits das Auftreten von linearen Verzerrungen (Anregung anderer Eigenbewegungsformen mit der Frequenz der Ziel-Eigenbewegungsform) verhindert. Als Grundlage dient der Zusammenhang zwischen der zu beeinflussenden, das heißt zu bedämpfenden Eigenform (Eigenvektor des Modes) und der Art der Eingangsbeschaltung, die erforderlich ist, um auch bei der Rückführung nur eines Modes nur diesen selbst und keine weiteren zu beeinflussen.

Im konkreten Fall bedeutet dies, dass zur Bedämpfung einer Rumpfeigenform das Vorhandensein von durch Aktuatoren betätigten Querrudern, Seitenrudern, Spoilern oder dergleichen erforderlich ist. Geht man also von einer Realisierung der Regeleinrichtung 42 in einer Zustandsvektorrückführung aus (der relevante Teil des Zustandsvektors wird durch die Filterung des Ausgangsvektors erzeugt), so lässt sich in Modalform zeigen, dass zur ausschließlichen Modifikation einer diskreten Eigenbewegung die Anzahl der notwendigen Steuerungseingänge gleich der Anzahl der physikalischen Freiheitsgrade sein muss. Hieraus folgt, dass theoretisch die Beaufschlagung aller Massepunkte des Flugzeugs mit Kompensationskräften, die aus Beschleunigungs- (bzw. Lage-) und Geschwindigkeitsrückführungen erzeugt werden, zur vollständigen Bedämpfung aller relevanten Moden erforderlich wäre.

In der Praxis ist dies aufgrund der hohen Anzahl von Freiheitsgraden nicht ideal realisierbar. Es lässt sich jedoch unter Berücksichtigung dieser theoretischen Randbedingungen eine optimale Annäherung durch die zur Verfügung stehenden Leit-, Steuer- und Regelflächen erreichen.

Eine Lastanalyse anhand des Diagramms der Fig. 3 an einer ausgewählten Position im vorderen Rumpfbereich des Flugzeugs lässt die Dominanz des elastischen Modes 18 erkennen, der maßgeblich zur mechanischen Gesamtbelastung des Flugzeugs beiträgt. Am Beispiel dieses einen dominanten elastischen Modes 18 soll im Weiteren zunächst erläutert werden, wie sich dieser mittels der erfindungsgemäßen Vorrichtung effektiv bedämpfen lässt. Die Regeleinrichtung 42 umfasst hierbei nur einen Regelstrang 43, da zunächst nur der einzelne dominante Mode 18 bedämpft werden soll.

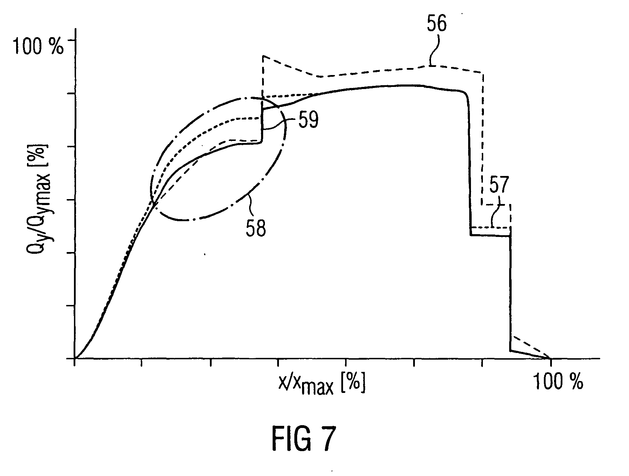

Das Diagramm der **Fig. 7** zeigt zunächst den Verlauf der auf die maximale Querkraft $Q_{Ymax}$ normierten Querkraft $Q_Y$ aufgetragen über die normierte Rumpflänge des Flugzeugs ohne und mit Einsatz der erfindungsgemäßen Vorrichtung im Vergleich zu einem Verlauf der maximal zulässigen Belastung.

Allen drei dargestellten Kurvenverläufen ist zunächst gemein, dass im Bereich einer Rumpfposition $x/x_{max}$ von etwa 40 Prozent eine Unstetigkeitsstelle existiert. Diese Unstetigkeitsstelle befindet sich ungefähr in einem Bereich, in dem die Tragflächen am Flugzeug angeordnet sind.

Ein Kurvenverlauf 56 illustriert zunächst die maximal zulässige Querkraft $Q_Y/Q_{Ymax}$ - Querkraft $Q_Y$ jeweils auf eine maximale Querkraft $Q_{Ymax}$ bezogen -, die an einer bestimmten Rumpfposition $x/x_{max}$ des Flugzeugs in keinem Fall überschritten werden darf. Ein Kurvenverlauf 57 symbolisiert den Verlauf der Querkraft $Q_Y/Q_{Ymax}$, der sich ohne den Einsatz der erfindungsgemäßen Vorrichtung ergibt. In diesem Zusammenhang ist zu bemerken, dass sich im Bereich einer Hervorhebung 58, also im vorderen Rumpfbereich des Flugzeugs, eine Überlastung ergibt. Ein Kurvenverlauf 59 spiegelt schließlich den sich beim Einsatz der erfindungsgemäßen Vorrichtung ergebenden Verlauf der Querkräfte $Q_Y/Q_{Ymax}$ wieder. Der Kurvenverlauf 59 liegt hierbei stets deutlich unter den maximal zulässigen Querkräften $Q_Y/Q_{Ymax}$ gemäß dem Kurvenverlauf 56.

Nach entsprechender Auslegung und Dimensionierung der Regeleinrichtung nach den weiter oben, im Rahmen der Beschreibung der Fig. 6 herausgearbeiteten Kriterien erhält man für das Flugzeug mit der erfindungsgemäßen Vorrichtung deutlich reduzierte Belastungen im vorderen Rumpfbereich. Insbesondere der diese Belastung hervorrufende dominante Mode (vgl. Fig. 3) wurde mittels der erfindungsgemäßen Vorrichtung effektiv bedämpft.

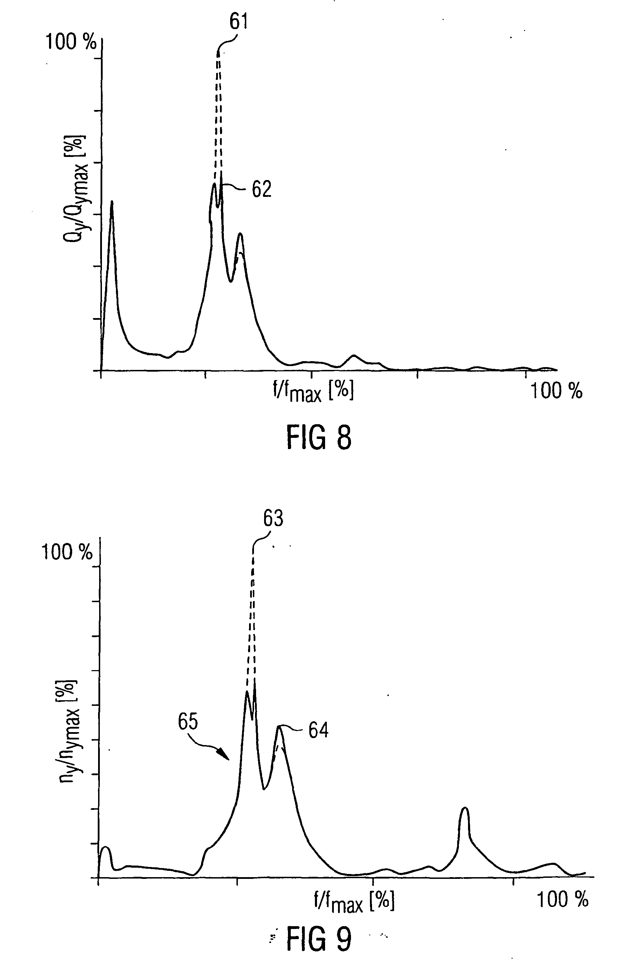

Die Darstellung der **Fig. 8** zeigt das Spektrum der auf die maximale Querkraft $Q_{Ymax}$ normierten Querkraft $Q_Y$ aufgetragen über die auf eine maximale Frequenz $f_{max}$ normierte Frequenz $f$ im vorderen Rumpfbereich des Flugzeugs ohne und mit Einsatz der Vorrichtung.

Der Kurvenverlauf 61 repräsentiert das Spektrum der Querkraft $Q_Y/Q_{Ymax}$ ohne Verwendung der erfindungsgemäßen Vorrichtung bzw. des erfindungsgemäßen Verfahrens. Der Kurvenverlauf 62 spiegelt hingegen das Spektrum der Querkraft $Q_Y/Q_{Ymax}$ wieder, das sich bei Einsatz der erfindungsgemäßen Vorrichtung bzw. des erfindungsgemäßen Verfahrens ergibt. Zu erkennen ist, dass sich im Bereich von ungefähr 25 Prozent der Maximalfrequenz des Spektrums $f_{max}$ eine signifikante Absenkung der Amplitude der dominanten Eigenbewegungsform der Querkräfte $Q_Y/Q_{Ymax}$ des Rumpfes des Flugzeugs durch den Einsatz der Vorrichtung ergibt. Hierdurch wird die mechanische Belastung des Rumpfes bzw. der Rumpfstruktur des Flugzeugs erheblich verringert.

Das Diagramm der **Fig. 9** zeigt das Beschleunigungsspektrum $n_Y/n_{Ymax}$ aufgetragen über die auf eine maximale Frequenz normierte Frequenz $f/f_{max}$ im Bereich des Sensormittels im vorderen Rumpfbereich des Flugzeugs ohne und mit Einsatz der erfindungsgemäßen Vorrichtung.

Auf der Hochachse des Diagramms sind die lateralen Beschleunigungswerte $n_Y$, jeweils bezogen auf einen maximalen Beschleunigungswert $n_{Ymax}$, im Bereich der Position des Sensormittels über das Frequenzverhältnis $f/f_{max}$ aufgetragen.

Ein Kurvenverlauf 63 repräsentiert die Beschleunigungswerte $n_Y/n_{Ymax}$ ohne den Einsatz der Vorrichtung, während ein Kurvenverlauf 64 die Beschleunigungswerte $n_Y/n_{Ymax}$ wiedergibt, die sich bei Verwendung der Vorrichtung ergeben. Aus der Darstellung des Diagramm der Fig. 9 ist ersichtlich, dass der Kurvenverlauf 64, der sich durch den Einsatz der erfindungsgemäßen Vorrichtung ergibt, den Kurvenverlauf 63 im Bereich einer dominanten Eigenbewegungsform 65 deutlich unterschreitet, sodass sich verringerte Beschleunigungswerte $n_Y/n_{Ymax}$ ergeben. Die Beschleunigungswerte $n_Y/n_{Ymax}$ an bestimmten Positionen des Rumpfes des Flugzeugs sind insbesondere für Stabilitäts- und Komfortprobleme relevant.

Infolge des Einsatzes der erfindungsgemäßen Vorrichtung bzw. des erfindungsgemäßen Verfahrens kann sich mithin eine erhebliche Verbesserung der Stabilität und des Komforts des Flugzeugs ergeben.

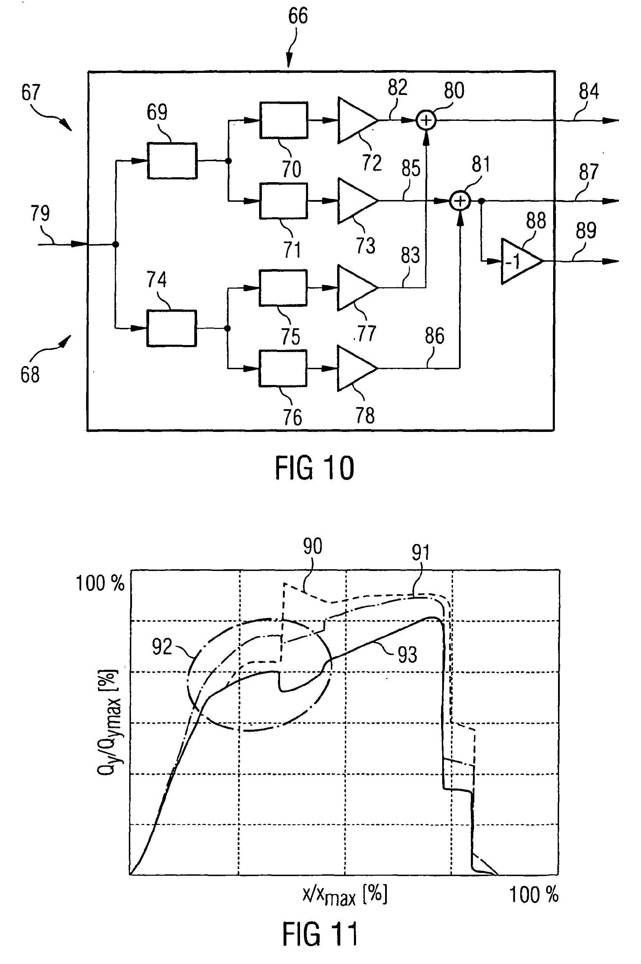

Die Fig. 10 illustriert den detaillierten Innenaufbau einer Ausführungsform der Regeleinrichtung 66 innerhalb der erfindungsgemäßen Vorrichtung zur gleichzeitigen Modifizierung von zwei Moden.

Der interne Aufbau der Regeleinrichtung 66 entspricht prinzipiell dem Aufbau der bereits beschriebenen Regeleinrichtungen, die zur Bedämpfung eines Modes ausgerichtet sind. Im Unterschied zu den bereits beschriebenen Regeleinrichtungen weist die Regeleinrichtung 66 zwei Regelstränge 67,68 auf. Der Regelstrang 67 umfasst im Wesentlichen ein Resonanzfilter 69 sowie zwei parallel nachgeordnete Phasenkorrektureinheiten 70,71, denen jeweils eine Verstärkungsfaktoreinheit 72 und 73 nachgeordnet ist. Der Regelstrang 68 umfasst entsprechend ein Resonanzfilter 74, dem die Phasenkorrektureinheiten 75,76 parallel nachgeordnet sind. Den Phasenkorrektureinheiten 75, 76 sind wiederum jeweils die Verstärkungsfaktoreinheiten 77 sowie 78 nachgeordnet. Den Resonanzfiltern 69,74 wird ein Messsignal 79, beispielsweise in der Form eines vom Sensormittel aufgenommenen Querbeschleunigungssignals $n_Y$ zugeführt. Weiterhin enthält die Regeleinrichtung 66 die Additionseinheiten 80,81. Die Additionseinheiten 80,81 sind nur erforderlich, wenn zwei oder mehr Modes, d.h. Starrkörpereigenform und/oder elastische Eigenbewegungsformen, bedämpft werden sollen. In diesem Fall werden die Ausgangssignale aus den jeweiligen Resonanzfiltern 69,74 (jeweils einer pro Mode) individuell in Phase und Amplitude mittels der Phasenkorrektureinheiten 70,71,75,76 und der Verstärkungsfaktoreinheiten 72,73,77,78 angepasst und anschließend in den Additionseinheiten 80,81 zu jeweils einem Rückführungssignal 84,87,89 pro Steuer-, Leit- und/oder Regelfäche zusammengeführt.

Ein Rückführungssignal 82 der Verstärkungsfaktoreinheit 72 wird auf die Additionseinheit 80 geleitet. Ein Rückführungssignal 83 der Verstärkungsfaktoreinheit 77 wird zur Bildung eines Rückführungssignals 84 ebenfalls auf die Additionseinheit 80 geleitet. Das Rückführungssignal 84 dient zur Betätigung von entsprechenden Steuer-, Leit- oder Regelflächen des Flugzeugs, beispielsweise in Form des Seitenruders, mittels nicht näher dargestellter Aktuatoren. Ein Rückführungssignal 85 der Verstärkungsfaktoreinheit 73 wird auf die Additionseinheit 81 geführt. Weiterhin wird ein Rückführungssignal 86 der Verstärkungsfaktoreinheit 78 ebenfalls zur Additionseinheit 81 zur Bildung eines Rückführungssignals 87 geleitet. Das Rückführungssignal 87 dient wiederum zur Betätigung entsprechender Steuer-, Leit- oder Regelflächen des Flugzeugs, beispielsweise der Querruder über nicht näher dargestellte Aktuatoren. Schließlich wird das Rückführungssignal 87 hinter der Additionseinheit 81 parallel über eine Negierungseinheit 88 zur Bildung eines Rückführungssignals 89 geleitet. Das Rückführungssignal 89 dient zur Betätigung entsprechender Steuer-, Leit- oder Regelflächen des Flugzeugs, insbesondere zur Betätigung der Spoiler mittels nicht näher dargestellter Aktuatoren. Durch die Verwendung der Negierungseinheit 88 wird eine zulässige Phasenkorrektureinheit eingespart, da die erforderlichen Rückführungssignale 87,89 zwischen den Querrudern und den Spoilern eines Flugzeugs in diesem Fall eine Phasenverschiebung von 180° aufweisen.

In der Darstellung der Fig. 10 ist deutlich zu erkennen, dass zur Bedämpfung einer jeden Starrkörpereigenform und/oder elastischen Eigenbewegung des Flugzeugs jeweils ein individueller Regelstrang 67,68 erforderlich ist. Sämtliche Komponenten der Regeleinrichtung 66 müssen dabei im Hinblick auf die zu bedämpfenden Moden des Flugzeugs individuell konfiguriert werden. Im Unterschied zu den bekannten Regeleinrichtungen werden aber nicht sämtliche unerwünschte Moden bis auf den zu bedämpfenden in einem subtraktiven und daher aufwändigen Verfahren herausgefiltert, sondern es werden nur die relevanten Moden mittels der Resonanzfilter 69,74 zur weiteren Verarbeitung in der Regeleinrichtung 66 durchgelassen.

Mittels der erfindungsgemäßen Vorrichtung werden nicht sämtliche störenden Moden gleichmäßig gedämpft. Es ist möglich, dass ein stark störender Mode relativ stark gedämpft wird, während ein schwächerer Mode - unter Umständen gar nicht störender Mode - sogar ein wenig verstärkt wird. Betrachtet man das Integral über alle Moden im Frequenzbereich von 0 bis 10 Hz hinweg, so ergibt sich in einer integralen Betrachtung in jedem Fall eine erhebliche Bedämpfung im Vergleich zu einem nicht mittels der erfindungsgemäßen Vorrichtung gedämpften System.

Die **Fig. 11** zeigt den Verlauf der auf die maximale Querkraft $Q_{Ymax}$ normierten Querkraft $Q_Y$ aufgetragen über die normierte Rumpflänge $x/x_{max}$ des Flugzeugs bei der Bedämpfung von zwei Moden jeweils ohne und mit Einsatz der Vorrichtung sowie im Vergleich mit einer weiteren Kurve.

Ein Kurvenverlauf 90 spiegelt die maximal zulässigen Belastungswerte wieder. Ein Kurvenverlauf 91 symbolisiert den Verlauf der Querkräfte ohne den Einsatz der erfindungsgemäßen Vorrichtung. Aus dem Vergleich der Kurvenverläufe 90,91 ergibt sich, dass die zulässigen Grenzwerte der normierten Querkraft $Q_Y/Q_{Ymax}$ zumindest im Bereich einer Hervorhebung 92 überschritten werden. Durch den Einsatz der erfindungsgemäßen Vorrichtung ergibt sich eine Unterschreitung der maximal zulässigen Querkräfte über die gesamte Rumpflänge des Flugzeugs, wie ein Kurvenverlauf 93 illustriert.

Nach Maßgabe des erfindungsgemäßen Verfahrens (vgl. Fig. 5) wird das Messsignal 31, beispielsweise in der Form des Querbeschleunigungssignals $n_Y$ der Regeleinrichtung 33 innerhalb der erfindungsgemäßen Vorrichtung zugeführt. Das Messsignal 33 wird mittels eines Sensormittels 27 im vorderen Rumpfbereich des Flugzeugs 22 erfasst und repräsentiert hierbei mindestens eine aktuelle elastische Eigenbewegung und/oder mindestens eine elastische Eigenbewegung des Flugzeugs 22. Innerhalb der Regeleinrichtung 33 erfolgt die Verarbeitung des Messsignals 31 zu einem Rückführungssignal 36 durch entsprechende Filtermittel. Der interne Aufbau der Regeleinrichtung 33 folgt hierbei dem Aufbau, der im Rahmen der Beschreibung der Fig. 6 und der Fig. 11 dargestellt wurde. In weiteren, in den Figuren nicht näher dargestellten Ausführungsformen der Regeleinrichtung 33 zur Durchführung des erfindungsgemäßen Verfahrens, ist es möglich, eine beliebige Anzahl von parallelen Faltersträngen vorzusehen.

Das Rückführungssignal 36 wird im Zuge der Durchführung des erfindungsgemäßen Verfahrens über nicht näher dargestellte Aktuatoren auf entsprechende Steuer-, Leit- oder Regelflächen des Flugzeugs 22, insbesondere Querruder, Seitenruder, Spoiler und dergleichen, zur Bedämpfung mindestens einer kritischen Starrkörpereigenform und/oder mindestens einer elastischen Eigenbewegung zurückgeführt. Hierdurch ergibt sich eine wirkungsvolle Bedämpfung der kritischen Starrkörpereigenformen und/oder elastischen Eigenformen des Flugzeugs.

Vor einem effektiven Einsatz der erfindungsgemäßen Vorrichtung bzw. der Durchführung des erfindungsgemäßen Verfahrens muss die Regeleinrichtung zunächst in der Entwicklungsphase des Flugzeugs entsprechend konfiguriert werden.

Dies erfolgt durch eine Gesamtanalyse der Übertragungsfunktionen und Eigenbewegungsformen des integralen Flugdynamikmodells des Flugzeugs. Die Ergebnisse der Gesamtanalyse werden dann zur Auswahl von geeigneten Sensormitteln, geeigneten Positionen zur Anordnung der Sensormittel sowie geeigneten Steuer-, Leit- und Regelflächen zur optimalen Bedämpfung kritischer Starrkörpereigenformen und/oder elastischer Eigenbewegungsformen verwendet. Bevorzugt werden als Sensormittel Beschleunigungssensoren eingesetzt, die im vorderen Rumpfbereich des Flugzeugs positioniert werden.

Nach Maßgabe einer Variante des erfindungsgemäßen Verfahrens werden gleichzeitig die Frequenzen der zu modifizierenden Starrkörpereigenformen und/oder der elastischen Eigenbewegungen des Flugzeugs mittels der Frequenzmesseinrichtung erfasst. Die Frequenzmesseinrichtung gibt zu diesem Zweck ein Frequenzmesssignal ab, das der Regeleinrichtung zugeführt wird. Hierdurch wird eine Anpassung an unterschiedliche Massenverhältnisse des Flugzeuges während des Flugverlaufs, beispielsweise bedingt durch den stetigen Treibstoffverbrauch, Rechnung getragen.

Über eine Phasen- und Amplitudenbetrachtung der relevanten Eigenbewegungsformen werden die Resonanzfilter, die Phasenkorrektureinheiten sowie die Verstärkungsfaktoreinheiten derart konfiguriert, dass sich bei Rückführung der von diesen Einheiten abgegebenen Rückführungssignale auf die Steuer-, Leit- und Regelflächen des Flugzeugs eine optimale Bedämpfung der ausgewählten Starrkörpereigenbewegungsformen und/oder der elastischen Eigenbewegungsformen ergibt.

Mittels des erfindungsgemäßen Verfahrens ist es im Ergebnis möglich, die Amplitude mindestens einer Starrkörpereigenform und/oder mindestens einer elastischen Eigenbewegung des Flugzeugs bei geringst möglichem regelungstechnischen Aufwand effektiv zu bedämpfen. Im Vergleich zu bekannten Verfahren, die auf einer subtraktiven Entfernung von unerwünschten Moden bis auf den zu modifizierenden Mode beruhen, ergibt sich ein deutlich reduzierter Systemaufwand.

Die erfindungsgemäße Vorrichtung sowie das erfindungsgemäße Verfahren sind auf beliebige lokale und globale Last-, Stabilitäts- und Komfortprobleme, insbesondere bei großen Flugzeugen, anwendbar. Hiermit ergibt sich erstmals die Möglichkeit, mit nur einem Messsignal eines diskreten Sensormittels, beispielsweise in der Form eines Querbeschleunigungssensor $n_Y$, eine beliebige Anzahl und eine beliebige Kombination von Starrkörpereigenbewegungsformen und/oder elastischen Eigenbewegungsformen des Flugzeugs gezielt zu modifizieren, ohne dabei negativen Einfluss auf zu erhaltende Eigenbewegungsformen zu nehmen. Dies wird durch den Aufbau einer modalen Regelung ohne die Notwendigkeit eines Beobachters ermöglicht, sodass sich im Ergebnis ein deutlich reduzierter Systemaufwand ergibt. Erfindungsgemäß ist die Anpassung der Ausschläge der selektierten Steuer-, Leit- und Regelflächen an die lokalen Amplituden der Eigenbewegungsformen zur Ermöglichung einer maximalen Dämpfung bei gleichzeitig minimalem Steuerungsaufwand möglich. Die erforderlichen Ausschläge der selektierten Steuer-, Leit- und Regelflächen betragen nur ca. 10 bis 15 Prozent im Vergleich zu den bisherigen Verfahren bzw. Vorrichtungen. Damit wird durch die erfindungsgemäße Vorrichtung bzw. das erfindungsgemäße Verfahren die Beanspruchung der Aktuatoren deutlich reduziert. Hieraus ergibt sich wiederum ein deutlich verringerter Luftwiderstand des Flugzeugs bei gleichzeitiger Senkung des Treibstoffverbrauchs.

Gleichzeitig verhindert die erfindungsgemäße Vorrichtung bzw. das erfindungsgemäße Verfahren die Entstehung von unerwünschten linearen Verzerrungen im Regelkreis und trägt dazu bei, dass keine weiteren unerwünschten Eigenbewegungsformen angeregt werden.

Abschließend ist zu bemerken, dass die erfindungsgemäße Vorrichtung bzw. das erfindungsgemäße Verfahren nicht auf Anwendungen zur Strukturlastabminderung bzw. Schwingungsbedämpfung bei großen Flugzeugen beschränkt zu sehen ist. Anwendungsmöglichkeiten zur Strukturlastabminderung bzw. Schwingungsbedämpfung sind bei allen größeren räumlichen Strukturen, beispielsweise auch Schiffen, Brücken und Gebäuden gegeben.

**Bezugszeichenliste**

| | |
|---|---|
| 1 | Flugzeug |
| 2 | erster Biegemode |
| 3 | zweiter Biegemode |
| 4 | Flugrichtung |
| 5 | Rumpf |
| 6 | Nase |
| 7 | Heck |
| 8 | Sensormittel |
| 9 | Steuer-, Leit- und/oder Regelflächen |
| 10 | Pfeil |
| 11 | Pfeil |
| 12 | Pfeil |
| 13 | Pfeil |
| 14 | Kurvenverlauf |
| 15 | Kurvenverlauf |
| 16 | Hervorhebung |
| 17 | Hervorhebung |
| 18 | dominanter Mode |
| 19 | Hervorhebung |
| 20 | dominante Eigenbewegung |
| 21 | Vorrichtung |
| 22 | Flugzeug |
| 23 | Rumpf |
| 24 | Nase |
| 25 | Heck |
| 26 | Tragflächen |
| 27 | Sensormittel |
| 28 | vorderer Rumpfbereich |
| 29 | Böen |
| 30 | Pfeil |
| 31 | Messsignal |
| 33 | Regeleinrichtung |
| 34 | Frequenzmesseinrichtung |
| 35 | Frequenzsignal |
| 36 | Rückführungssignal |
| 37 | Spoiler |

| | |
|---|---|
| 38 | Seitenruder |
| 39 | Querruder |
| 40 | Steuer-, Leit- und/oder Regelflächen |
| 41 | Pfeil |
| 42 | Regeleinrichtung |
| 43 | Regelstrang |
| 44 | Resonanzfilter |
| 45 | Phasenkorrektureinheit |
| 46 | Phasenkorrektureinheit |
| 47 | Verstärkungsfaktoreinheit |
| 48 | Verstärkungsfaktoreinheit |
| 49 | Negierungseinheit |
| 50 | Messsignal |
| 51 | Signal |
| 52 | Rückführungssignale |
| 53 | Rückführungssignal |
| 54 | Rückführungssignal |
| 55 | Rückführungssignal |
| 56 | Kurvenverlauf |
| 57 | Kurvenverlauf |
| 58 | Hervorhebung |
| 59 | Kurvenverlauf |
| 61 | Kurvenverlauf |
| 62 | Kurvenverlauf |
| 63 | Kurvenverlauf |
| 64 | Kurvenverlauf |
| 65 | dominante Eigenbewegungsform |
| 66 | Regeleinrichtung |
| 67 | Regelstrang |
| 68 | Regelstrang |
| 69 | Resonanzfilter |
| 70 | Phasenkorrektureinheit |
| 71 | Phasenkorrektureinheit |
| 72 | Verstärkungsfaktoreinheit |
| 73 | Verstärkungsfaktoreinheit |
| 74 | Resonanzfilter |
| 75 | Phasenkorrektureinheit |
| 76 | Phasenkorrektureinheit |
| 77 | Verstärkungsfaktoreinheit |
| 78 | Verstärkungsfaktoreinheit |
| 79 | Messsignal |
| 80 | Additionseinheit |
| 81 | Additionseinheit |
| 82 | Rückführungssignal |
| 83 | Rückführungssignal |
| 84 | Rückführungssignal |
| 85 | Rückführungssignal |
| 86 | Rückführungssignal |
| 87 | Rückführungssignal |
| 88 | Negierungseinheit |
| 89 | Rückführungssignal |
| 90 | Kurvenverlauf |
| 91 | Kurvenverlauf |
| 92 | Hervorhebung |
| 93 | Kurvenverlauf |

**Patentansprüche**

1. Vorrichtung zur Bedämpfung mindestens einer Starrkörpereigenform und/oder mindestens einer elastischen Eigenbewegungsform eines Luftfahrzeugs, insbesondere zur Böenlastabminderung, Stabilitäts- und Komforterhöhung bei einem Flugzeug (1,22), mit mindestens einem Sensormittel (8,27) sowie mit einer mit dem oder den Sensormitteln (8,27) verbundenen Regeleinrichtung (33,42,66) und mindestens einem auf Steuer-, Leit- und/oder Regelflächen (40) des Luftfahrzeugs einwirkbaren Aktuator, wobei

   mittels der Regeleinrichtung (33,42,66) jeweils mindestens eine Starrkörpereigenform und/oder mindestens eine elastische Eigenbewegungsform des Luftfahrzeugs modifizierbar ist; **dadurch gekennzeichnet, dass**

   die Regeleinrichtung (33,42,66) für jede zu modifizierende Starrkörpereigenform und/oder elastische Eigenbewegungsform jeweils einen Resonanzfilter (44,69,74) mit mindestens zwei nachgeordneten Phasenkorrektureinheiten (45,46,70,71,75,76) zur Modifikation der betreffenden Starrkörpereigenform und/oder der elastischen Eigenbewegungsform des Luftfahrzeugs aufweist.

2. Vorrichtung nach Anspruch 1, **dadurch gekennzeichnet, dass** ein von dem oder den Sensormitteln (8,27) abgegebenes Messsignal (31,50,79) der Regeleinrichtung zuführbar ist, wobei das Messsignal (31,50,79) im Wesentlichen alle relevanten Starrkörpereigenformen und/oder elastischen Eigenbewegungsformen des Luftfahrzeugs repräsentiert.

3. Vorrichtung nach Anspruch 1 oder 2, **dadurch gekennzeichnet, dass** das oder die Resonanzfilter (44,69,74) durch eine Eigenfrequenz $\omega_0$ und durch eine Dämpfung parametriert sind, sodass eine optimale Adaption des oder der Resonanzfilter (44,69,74) an die zu modifizierenden Starrkörpereigenformen und/oder elastischen Eigenbewegungsformen des Luftfahrzeugs möglich ist.

4. Vorrichtung nach einem der Ansprüche 1 bis 3, **dadurch gekennzeichnet, dass** den Phasenkorrektureinheiten (45,46,70,71,75,76) jeweils mindestens eine Verstärkungsfaktoreinheit (47,48,72,73,77,78) zur Bildung mindestens eines Rückführungssignals (36,52-55,82-87,89) nachgeordnet ist, wobei das Rückführungssignal oder die Rückführungssignale (36,52-55,82-87,89) über den oder die Aktuatoren auf mindestens eine Steuer-, Leit- und Regelfläche (40) des Luftfahrzeugs zurückführbar sind.

5. Vorrichtung nach einem der Ansprüche 1 bis 4, **dadurch gekennzeichnet, dass** die Vorrichtung derart eingerichtet ist, dass mittels der Steuer-, Leit- und/oder Regelflächen (40) eine Minimierung des Verschleißes der Aktuatoren und des Energieverbrauchs bereitstellbar ist.

6. Vorrichtung nach einem der Ansprüche 1 bis 5, **dadurch gekennzeichnet, dass** die Regeleinrichtung (33,42,66) im Fall von mindestens zwei Starrkörpereigenformen und/oder mindestens zwei elastischen Eigenbewegungsformen mindestens eine Additionseinheit (80,81) zur Zusammenführung von mindestens zwei Rückführungssignalen (82,83,85,86) zu einem Rückführungssignal (84,87,89) zur Ansteuerung mindestens eines Aktuators aufweist, wobei die Rückführungssignale (82-87,89) jeweils von unterschiedlichen Resonanzfiltern (69,74) stammen.

7. Vorrichtung nach einem der Ansprüche 1 bis 6, **dadurch gekennzeichnet, dass** im Falle einer Phasenverschiebung von etwa 180° zwischen zwei Rückführungssignalen (54,55,87,89) für die Steuer-, Leit- und/oder Regelflächen (40) eine Phasenkorrektureinheit (45,46,70,71,75,76) durch eine Negierungseinheit (49,88) ersetzbar ist.

8. Vorrichtung nach einem der Ansprüche 1 bis 7, **dadurch gekennzeichnet, dass** der Regeleinrichtung (33,42,66) ein die Frequenz mindestens einer Starrkörpereigenform und/oder mindestens einer elastischen Eigenbewegungsform repräsentierendes Frequenzsignal (35) einer Frequenzmesseinrichtung (34) zuführbar ist.

9. Verfahren zur Bedämpfung mindestens einer Starrkörpereigenform und/oder mindestens einer elastischen Eigenbewegungsform eines Luftfahrzeugs, insbesondere zur Böenlastabminderung, Stabilitäts- und Komforterhöhung bei einem Flugzeug (1,22), mit mindestens einem Sensormittel (8,27) sowie mit einer mit dem oder den Sensormitteln (8,27) verbundenen Regeleinrichtung (33,42,66) und mindestens einem auf Steuer-, Leit- und/oder Regelflächen (40) des Luftfahrzeugs einwirkenden Aktuator, wobei mittels der Regeleinrichtung (33,42,66) jeweils mindestens eine Starrkörpereigenform und/oder mindestens eine elastische Eigenbewegungsform des Luftfahrzeugs modifiziert wird; **dadurch gekennzeichnet, dass**

in der Regeleinrichtung (33,42,66) jede zu modifizierende Starrkörpereigenform und/oder elastische Eigenbewegungsform mittels eines Resonanzfilters (44,69,74) mit mindestens zwei nachgeordneten Phasenkorrektureinheiten (45,46,70,71,75,76) modifiziert wird, um mindestens zwei Rückführungssignale (36,52-55,82-87,89) zur Modifikation der betreffenden Starrkörpereigenform und/oder der elastischen Eigenbewegungsformen des Luftfahrzeugs zu bilden.

10. Verfahren nach Anspruch 9, **dadurch gekennzeichnet, dass** ein von dem oder den Sensormitteln (8,27) abgegebenes Messsignal (31,50,79) der Regeleinrichtung zugeführt wird, wobei das Messsignal (31,50,79) im Wesentlichen alle relevanten Starrkörpereigenformen und/oder elastischen Eigenbewegungsformen des Luftfahrzeugs repräsentiert.

11. Verfahren nach Anspruch 9 oder 10, **dadurch gekennzeichnet, dass** das oder die Resonanzfilter (44,69,74) durch eine Eigenfrequenz $\omega_0$ und durch eine Dämpfung parametrisiert werden, sodass sich eine optimale Adaption des oder der Resonanzfilter (44,69,74) an die zu modifizierenden Starrkörpereigenformen und/oder elastischen Eigenbewegungsformen des Luftfahrzeuges ergibt.

12. Verfahren nach einem der Ansprüche 9 bis 11, **dadurch gekennzeichnet, dass** den Phasenkorrektureinheiten (45,46,70,71,75,76) jeweils mindestens eine Verstärkungsfaktoreinheit (47,48,72,73,77,78) zur Bildung mindestens eines Rückführungssignals (36,52-55,82-87,89) nachgeordnet wird, wobei das Rückführungssignal oder die Rückführungssignale (36,52-55,82-87,89) über den oder die Aktuatoren auf mindestens eine Steuer-, Leit- und Regelfläche (40) des Luftfahrzeugs zurückgeführt werden.

13. Verfahren nach einem der Ansprüche 9 bis 12, **dadurch gekennzeichnet, dass** die Steuer-, Leit- und Regelflächen (40) insbesondere durch Quer-, Seitenruder und Spoiler (37,38,39) des Luftfahrzeugs gebildet werden.

14. Verfahren nach einem der Ansprüche 9 bis 13, **dadurch gekennzeichnet, dass** in der Regeleinrichtung (33,42,66) im Fall von mindestens zwei Starrkörpereigenformen und/oder mindestens zwei elastischen Eigenbewegungsformen in mindestens einer Additionseinheit (80,81) mindestens zwei Rückführungssignale (82,83,85,86) zu einem Rückführungssignal (84,87,89) zur Ansteuerung mindestens eines Aktuators zusammengeführt werden, wobei die Rückführungssignale (82-87,89) jeweils von unterschiedlichen Resonanzfiltern (69,74) stammen.

15. Verfahren nach einem der Ansprüche 9 bis 14, **dadurch gekennzeichnet, dass** im Falle einer Phasenverschiebung von etwa 180° zwischen zwei Rückführungssignalen (54,55,87,89) für die Steuer-, Leit- und/oder Regelflächen (40) eine Phasenkorrektureinheit (45,46,70,71,75,76) durch eine Negierungseinheit (49,88) ersetzt wird.

16. Verfahren nach einem der Ansprüche 9 bis 15, **dadurch gekennzeichnet, dass** der Regeleinrichtung (33,42,66) ein die Frequenz mindestens einer Starrkörpereigenform und/oder mindestens einer elastischen Eigenbewegungsform repräsentierendes Frequenzsignal (35) einer Frequenzmesseinrichtung (34) zugeführt wird.

## Claims

1. Device for damping at least one rigid body mode and/or at least one elastic motion mode of an aircraft, in particular to reduce gust loading and increase stability and comfort in an aircraft (1, 22) with at least one sensor (8, 27) and with a controller (33, 42, 66) connected to the sensor or sensors (8, 27) and at least one actuator acting upon the control, guiding and/or regulating surfaces (40) of the aircraft, wherein the controller (33, 42, 66) can be used to modify at least one rigid body mode and/or at least one elastic motion mode of the aircraft **characterised in that** the controller (33, 42, 66) has a resonance filter (44, 69, 74) with at least two downstream phase correction units (45, 46, 70, 71, 75, 76) for each rigid body mode and/or elastic motion mode to be modified in order to modify the rigid body mode and/or elastic motion mode of the aircraft in question.

2. Device according to claim 1, **characterised in that** a measurement signal (31, 50, 79) output from the sensor or sensors (8, 27) can be supplied to the controller, wherein the measurement signal (31, 50, 79) substantially represents all the relevant rigid body modes and/or elastic motion modes of the aircraft.

3. Device according to claim 1 or 2, **characterised in that** the resonance filter or filters (44, 69, 74) are parameterised by an eigenfrequency $\omega_0$ and by a damping so that optimum adaptation of the resonance filter or filters (44, 69, 74) to the rigid body mode and/or elastic motion mode of the aircraft to be modified is possible.

4. Device according to any one of claims 1 to 3, **characterised in that** there is at least one amplifier (47, 48, 72, 73, 77, 78) downstream of each of the phase correction units (45, 46, 70, 71, 75, 76) to generate at least one feedback signal (36, 52-55, 82-87, 89), wherein the feedback signal or feedback signals (36, 52-55, 82-87, 89) can be supplied back to at least one control, guiding and regulating surface (40) of the aircraft through the actuator or actuators.

5. Device according to any one of claims 1 to 4, **characterised in that** the device is arranged so that wear on the actuators and energy consumption can be minimised by means of the control, guiding and/or regulating surfaces (40).

6. Device according to any one of claims 1 to 5, **characterised in that**, in the event of at least two rigid body modes and/or at least two elastic motion forms, the controller (33, 42, 66) has at least one addition unit (80, 81) to combine at least two feedback signals (82, 83, 85, 86) into one feedback signal (84, 87, 89) to drive at least one actuator, wherein the feedback signals (82-97, 89) each originate from different resonance filters (69, 74).

7. Device according to any one of claims 1 to 6, **characterised in that**, in the event of a phase shift of about 180°C between two feedback signals (54, 55, 87, 89) for the control, guiding and regulating surfaces (40), a phase correction unit (45, 46, 70, 71, 75, 76) can be replaced by an inverter (49, 88).

8. Device according to any one of claims 1 to 7, **characterised in that**, a frequency signal (35) from a frequency measurement unit (34) representing the frequency of at least one rigid body mode and/or at least one elastic motion mode can be supplied to the controller (33, 42, 66).

9. Method of damping at least one rigid body mode and/or at least one elastic motion mode of an aircraft, in particular to reduce gust loading, increase stability and comfort in an aircraft (1, 22) with at least one sensor (8, 27) and with a controller (33, 42, 66) connected to the sensor or sensors (8, 27) and at least one actuator acting upon the control, guiding and/or regulating surfaces (40) of the aircraft, wherein the controller (33, 42, 66) can be used to modify at least one rigid body mode and/or at least one elastic motion mode of the aircraft **characterised in that** the controller (33, 42, 66) is modified by a resonance filter (44, 69, 74) with at least two downstream phase correction units (45, 46, 70, 71, 75, 76) for each rigid body mode and/or elastic motion mode to be modified, in order to produce at least two feedback signals (36, 52-55, 82-87, 89) to modify the rigid body mode and/or elastic motion mode of the aircraft in question.

10. Method according to claim 99, **characterised in that** a measurement signal (31, 50, 79) output from the sensor or sensors (8, 27) is supplied to the controller, wherein the measurement signal (31, 50, 79) substantially represents all the relevant rigid body modes and/or elastic motion modes of the aircraft.

11. Method according to claim 9 or 10, **characterised in that** the resonance filter or filters (44, 69, 74) are parameterised by an eigenfrequency $\omega_0$ and by a damping so that optimum adaptation of the resonance filter or filters (44, 69, 74) to the rigid body mode and/or elastic motion mode of the aircraft to be modified is produced.

12. Method according to any one of claims 9 to 11, **char-**

**acterised in that** there is at least one amplifier (47, 48, 72, 73, 77, 78) downstream of each of the phase correction units (45, 46, 70, 71, 75, 76) to generate at least one feedback signal (36, 52-55, 82-87, 89), wherein the feedback signal or feedback signals (36, 52-55, 82-87, 89) can be supplied back to at least one control, guide and regulating surface (40) of the aircraft through the actuator or actuators.

13. Method according to any one of claims 9 to 12, **characterised in that** the control, guiding and/or regulating surfaces (40) are formed in particular by the ailerons, rudders and spoilers (37, 38, 39) of the aircraft.

14. Method according to any one of claims 9 to 13, **characterised in that**, in the event of at least two rigid body modes and/or at least two elastic motion forms, in the controller (33, 42, 66), at least two feedback signals (82, 83, 85, 86) are combined in at least one addition unit (80, 81) into one feedback signal (84, 87,89) to drive at least one actuator, wherein the feedback signals (82-97, 89) each originate from different resonance filters (69, 74).

15. Method according to any one of claims 9 to 14, **characterised in that**, in the event of a phase shift of about 180°C between two feedback signals (54, 55, 87, 89) for the control, guiding and regulating surfaces (40), a phase correction unit (45, 46, 70, 71, 75, 76) can be replaced by an inverter (49, 88).

16. Method according to any one of claims 9 to 15, **characterised in that** a frequency signal (35) from a frequency measurement unit (34) representing the frequency of at least one rigid body mode and/or at least one elastic motion mode can be supplied to the controller (33, 42, 66).

**Revendications**

1. Dispositif pour amortir au moins un mode propre d'un corps rigide et/ou au moins un mode élastique propre d'un aéronef, en particulier pour réduire la charge due aux rafales, augmenter la stabilité et le confort dans le cas d'un avion (1, 22), comportant au moins un moyen de détection (8, 27), ainsi que comportant un dispositif de régulation (33, 42, 66) relié avec le ou les moyens de détection (8, 27) et au moins un actionneur pouvant agir sur des surfaces de commande, de guidage ou de régulation (40) de l'aéronef, dans lequel
au moyen du dispositif de régulation (33, 42, 66), chaque fois au moins un mode propre du corps rigide et/ou au moins un mode élastique propre de l'aéronef peut être modifié ;
**caractérisé en ce que**

le dispositif de régulation (33, 42, 66) comporte, pour chaque mode propre du corps rigide et/ou mode élastique propre à modifier, chaque fois un filtre à résonance (44, 69, 74) doté d'au moins deux unités de correction de phase (45, 46, 70, 71, 75, 76) montées en aval pour modifier le mode propre du corps rigide et/ou mode élastique propre concerné de l'aéronef.

2. Dispositif selon la revendication 1, **caractérisé en ce qu'**un signal de mesure (31, 50, 79) émis par le ou les moyens de détection (8, 27) peut être amené au dispositif de régulation, le signal de mesure (31, 50, 79) représentant essentiellement tous les modes propres du corps rigide et/ou modes élastiques propres pertinents de l'aéronef.

3. Dispositif selon la revendication 1 ou 2, **caractérisé en ce que** le ou les filtres à résonance (44, 69, 74) sont paramétrés avec une fréquence propre $\omega_0$ et un amortissement, de sorte qu'une adaptation optimale du ou des filtres à résonance (44, 69, 74) aux modes propres du corps rigide et/ou modes élastiques propres à modifier, de l'aéronef, est possible.

4. Dispositif selon l'une des revendications 1 à 3, **caractérisé en ce que** chaque fois au moins une unité de facteur d'amplification (47, 48, 72, 73, 77, 78) est disposée en aval des unités de correction de phase (45, 46, 70, 71, 75, 76) pour former au moins un signal de retour (36, 52-55, 82-87 89), le signal de retour ou les signaux de retour (36, 52-55, 82-87 89) pouvant être renvoyés par l'intermédiaire du ou des actionneurs, sur au moins une surface de commande, guidage et régulation (40) de l'aéronef.

5. Dispositif selon l'une des revendications 1 à 4, **caractérisé en ce que** le dispositif est agencé de telle façon qu'une réduction de l'usure des actionneurs et de la consommation d'énergie peut être mise en oeuvre au moyen des surfaces de commande, de guidage et/ou de régulation (40).

6. Dispositif selon l'une des revendications 1 à 5, **caractérisé en ce que** le dispositif de régulation (33, 42, 66), dans le cas d'au moins deux modes propres du corps rigide et/ou d'au moins deux modes élastiques propres, comporte au moins une unité d'addition (80, 81) pour regrouper au moins deux signaux de retour (82, 83, 85, 86) en un signal de retour (84, 87, 89) pour piloter au moins un actionneur, les signaux de retour (82-87, 89) provenant chacun de filtres à résonance (69, 74) différents.

7. Dispositif selon l'une des revendications 1 à 6, **caractérisé en ce que**, dans le cas d'un déphasage d'environ 180°, entre deux signaux de retour (54, 55, 87, 89) pour les surfaces de commande, de guidage et/ou de régulation (40), une unité de correction de phase (45, 46, 70, 71, 75, 76) peut être remplacée par une unité d'inversion logique (49, 88).

**8.** Dispositif selon l'une des revendications 1 à 7, **caractérisé en ce qu'**un signal de fréquence (35) d'un dispositif de mesure de fréquence (34) représentant la fréquence d'au moins un mode propre du corps rigide et/ou d'au moins un mode élastique propre peut être amené au dispositif de régulation (33, 42, 66).

**9.** Procédé pour amortir au moins un mode propre du corps rigide et/ou au moins un mode élastique d'un aéronef, en particulier pour réduire la charge due aux rafales, augmenter la stabilité et le confort dans le cas d'un avion (1, 22), comportant au moins un moyen de détection (8, 27), ainsi que comportant un dispositif de régulation (33, 42, 66) relié avec le ou les moyens de détection (8, 27) et au moins un actionneur agissant sur des surfaces de commande, de guidage ou de régulation (40) de l'aéronef, dans lequel

au moyen du dispositif de régulation (33, 42, 66) chaque fois au moins un mode d'un corps rigide et/ou au moins un mode élastique de l'aéronef est modifié ;

**caractérisé en ce que**

dans le dispositif de régulation (33, 42, 66), chaque mode propre du corps rigide et/ou mode élastique propre à modifier, est modifié au moyen d'un filtre à résonance (44, 69, 74) doté d'au moins deux unités de correction de phase (45, 46, 70, 71, 75, 76) montées en aval pour former au moins deux signaux de retour (36, 52-55, 82-87, 89) pour modifier le mode propre du corps rigide et/ou mode élastique propre concerné de l'aéronef.

**10.** Procédé selon la revendication 9, **caractérisé en ce qu'**un signal de mesure (31, 50, 79) émis par le ou les moyens de détection (8, 27) est amené au dispositif de régulation, le signal de mesure (31, 50, 79) représentant essentiellement tous les modes propres du corps rigide et/ou modes élastiques propres pertinents de l'aéronef.

**11.** Procédé selon la revendication 9 ou 10, **caractérisé en ce que** le ou les filtres à résonance (44, 69, 74) sont paramétrés avec une fréquence propre $\omega_0$ et un amortissement, de sorte qu'il s'obtient une adaptation optimale du ou des filtres à résonance (44, 69, 74) aux modes propres du corps rigide et/ou modes élastiques propres à modifier.

**12.** Procédé selon l'une des revendications 9 à 11, **caractérisé en ce que** chaque fois au moins une unité de facteur d'amplification (47, 48, 72, 73, 77, 78) est disposée en aval des unités de correction de phase (45, 46, 70, 71, 75, 76) pour former au moins un signal de retour (36, 52-55, 82-87 89), le signal de retour ou les signaux de retour (36, 52-55, 82-87 89) étant renvoyés par l'intermédiaire du ou des actionneurs, sur au moins une surface de commande, guidage et régulation (40) de l'aéronef.

**13.** Procédé selon l'une des revendications 9 à 12, **caractérisé en ce que** les surfaces de commande, de guidage et de régulation (40) sont en particulier constituées par des ailerons, des gouvernails de direction et des déflecteurs (37, 38, 39) de l'aéronef.

**14.** Procédé selon l'une des revendications 9 à 13, **caractérisé en ce que** dans le dispositif de régulation (33, 42, 66), dans le cas d'au moins deux modes propres du corps rigide et/ou d'au moins deux modes élastiques propres, au moins deux signaux de retour (82, 83, 85, 86) sont regroupés en un signal de retour (84, 87, 89) dans au moins une unité d'addition (80, 81) pour piloter au moins un actionneur, les signaux de retour (82-87, 89) provenant chacun de filtres à résonance (69, 74) différents.

**15.** Procédé selon l'une des revendications 9 à 14, **caractérisé en ce que**, dans le cas d'un déphasage d'environ 180°, entre deux signaux de retour (54, 55, 87, 89) pour les surfaces de commande, de guidage et/ou de régulation (40), une unité de correction de phase (45, 46, 70, 71, 75, 76) est remplacée par une unité d'inversion logique (49, 88).

**16.** Procédé selon l'une des revendications 9 à 15, **caractérisé en ce qu'**un signal de fréquence (35) d'un dispositif de mesure de fréquence (34) représentant la fréquence d'au moins un mode propre du corps rigide et/ou d'au moins un mode élastique propre est amené au dispositif de régulation (33, 42, 66).

FIG 1

FIG 2

FIG 3

FIG 4

FIG 5

FIG 6

FIG 7

FIG 8

FIG 9

FIG 10

FIG 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0293018 A
- US 20030205644 A